# EUROPÄISCHE PATENTSCHRIFT

(11) **EP 0 298 909 B1**
(45) Veröffentlichungstag und Bekanntmachung des Hinweises auf die Patenterteilung: **04.08.1993**
(21) Anmeldenummer: 88810077.3
(22) Anmeldetag: 09.02.1988
(51) Int. Cl.: A61C 13/265

(54) **Extrakoronales, aktivierbares Geschiebe**
Extracoronal activatable slide attachment
Glissière extracoronaire activable

(30) Priorität: 07.07.1987 CH 573/87
(43) Veröffentlichungstag der Anmeldung: 11.01.1989
(73) Patentinhaber: CENDRES ET METAUX S.A., CH-2501 Bienne (CH)
(72) Erfinder: Guglielmetti, Silvio, CH-6952 Canobbio (CH); Hahn, Rolf, CH-2068 Hauterive (CH); Villard, Michel, CH-3302 Moosseedorf (CH)
(74) Vertreter: Seehof, Michel

(56) Entgegenhaltungen:
- DE-U- 8 417 556
- US-A- 1 638 820
- US-A- 2 271 796
- US-A- 4 362 509
- US-A- 4 573 923

## Beschreibung

Die vorliegende Erfindung bezieht sich auf ein extrakoronales, aktivierbares Geschiebe, mit einer am natürlichen Zahn oder Implantat zu befestigenden Patrize und einer daran befestigbaren, mit dem Zahnersatzteil zu verbindenden Matrize.

Es sind eine grosse Anzahl von Geschieben bekannt, wobei man in der Regel zwischen intrakoronalen Geschieben, worin die Matrize am natürlichen Zahn oder Implantat verankert ist und extrakoronalen Geschieben, worin, wie bei vorliegender Anmeldung die Patrize am natürlichen Zahn oder Implantat verankert ist.

Aus der US-A-4 362 509 ist ein extrakoronales Geschiebe bekannt geworden, bei dem zwischen Matrize und Patrize ein Zwischenstück aus elastischem Werkstoff vorgesehen ist. Es soll zur Verhinderung des Direktkontaktes zwischen Patrize und Matrize dienen und eventuelle Passungsfehler ausgleichen. Es soll offensichtlich nicht als Friktionselement dienen; beispielsweise besteht es aus Teflon, was bekanntermassen einen sehr niedrigen Reibungskoeffizienten besitzt, und logischerweise ist auch kein Organ vorgesehen, um die Friktionskraft zwischen Patrize und Matrize einstellbar zu machen.

Unter Aktivieren versteht man die Möglichkeit, die unvermeidliche Abnutzung der aufeinanderreibenden Geschiebeteile zu kompensieren, wobei dies vorher durch aktivierbare zylindrische Stifte oder U-förmige Drähte oder Austausch konischer oder keilförmiger Profilteile erzielt werden konnte. Sämtliche vorbekannte Aktivierungsmittel haben den Nachteil, entweder kompliziertere und schwer herstellbare Teile zu bedingen und/oder relativ schwer einstellbar zu sein.

Ueberdies benötigen vorbekannte extrakoronale Geschiebeanordnungen einen sogenannten Stabilisator, der über einen Ueberguss, auch Umlauf genannt, mit dem Geschiebeteil verbunden ist.

Es ist davon ausgehend Aufgabe der vorliegenden Erfindung ein extrakoronales, aktivierbares Geschiebe anzugeben, das einfache und genau arbeitende Aktivierungsmittel aufweist. Eine weitere Aufgabe ist es, das Geschiebe derart auszubilden, dass ein Umlauf nicht mehr benötigt wird. Diese Aufgaben werden mit einem in den Ansprüchen definierten Geschiebe gelöst.

Die Erfindung wird im folgenden anhand einer Zeichnung eines Ausführungsbeispiels näher erläutert.
- Figur 1: zeigt im Längsschnitt ein erfindungsgemässes Geschiebe und
- Figur 2: zeigt einen Schnitt gemäss der Linie II/II von Figur 1.

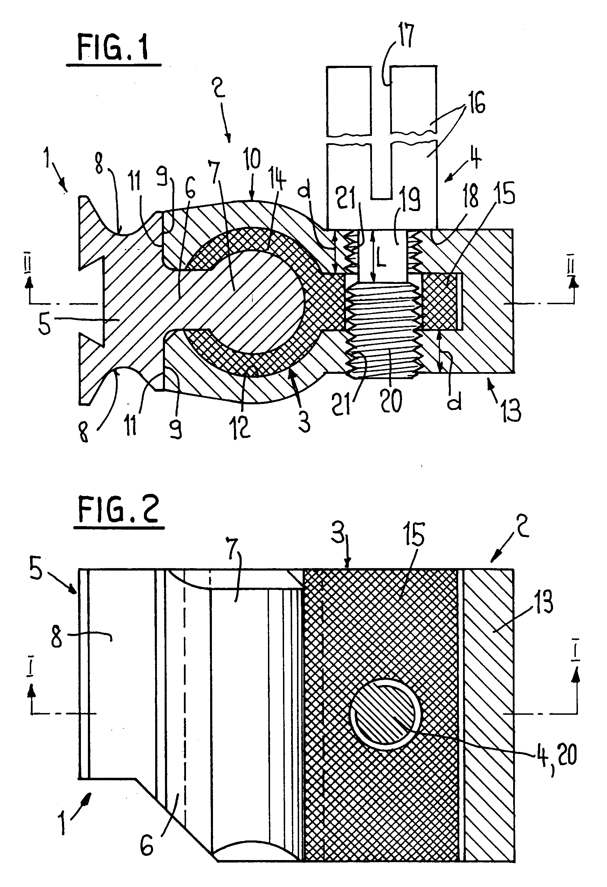

Man erkennt in Figur 1 die Hauptteile des Geschiebes, d.h. die Patrize 1, die Matrize 2 und den Kunststoffeinsatz 3 sowie die den Kunststoffeinsatz befestigenden Schraube 4. Die Patrize besteht aus einer Approximalplatte 5, einem Steg 6 und einem zylindrischen Gleitteil 7. Im Gegensatz zu den vorbekannten Patrizen und um den Stabilisator und Umlauf überflüssig zu machen, besitzt die Approximalplatte beidseitig mindestens je eine Längsrille 8. Diese Rillen dienen dazu, die lateralen und Rotationsbewegungen abzufangen, so dass ohne Umlauf mit Stabilisator ausgekommen werden kann. Statt konkave Rillen können auch konvexe Rippen verwendet werden. Die beidseitig des Steges 6 sich befindlichen Flächen der Approximalplatte bilden Führungsflächen 9.

Die Matrize ist in seinem Steckteil 10 komplementär zu den Führungsflächen und dem Gleitteil ausgebildet und weist demnach Führungsflächen 11 sowie eine zylindrische Ausnehmung 12 auf, die ausgebildet ist, den Kunststoffeinsatz aufzunehmen. Diesem Steckteil 2 schliesst sich ein im Grundriss etwa U-förmiger Verankerungsteil 13 an. Der Kunststoffeinsatz 3 besteht aus einem das Gleitteil 7 der Patrize umschliessendes Friktionsteil 14 und ein daran anschliessendes, im U-förmigen Verankerungsteil passendes Befestigungsteil 15. Als Material für den Kunststoffeinsatz kommt ein geeigneter Kunststoff in Frage.

Der Kunststoffeinsatz ist durch eine den U-förmigen Verankerungsteil 13 und das Befestigungsteil 15 des Einsatzes durchquerende Schraube 4 befestigt, wobei diese Schraube eine weitere Funktion hat, wie aus der nachfolgenden Beschreibung hervorgehen wird. Die Schraube 4 weist von oben nach unten gesehen einen Kopf 16 mit Schlitz 17 auf, wobei die Länge dieses Kopfes dem Geschiebe, bzw. dem Einsatzort des Geschiebes angepasst ist. Der Kopf 16 hat einen wesentlich grösseren Durchmesser als der Teil, der sich im Verankerungsteil der Matrize befindet, um eine möglichst gute Abstützfläche 18 zu bilden. An den Kopf schliesst sich ein gewindeloses Zylinderstück 19 an, dessen Länge L etwas grösser ist als die Dicke d eines Schenkels des U-förmigen Verankerungsteils 13. An das Zylinderstück 19 schliesst sich ein Gewindebolzenstück 20 an, dessen Gewinde dem durchgehenden Innengewinde 21 im Verankerungsteil 13 entspricht.

Aus der Beschreibung und Zeichnung ist die Funktion der Schraube klar ersichtlich. Beim Hineindrehen derselben stützt sich die Abstützfläche 18 auf dem Verankerungsteil auf und beim weiteren Hineindrehen zieht die Schraube den unteren Schenkel des U-förmigen Verankerungsteils nach oben und übt dadurch einen Druck auf den Kunststoffeinsatz aus, den dieser auf das Gleitteil der Patrize weitergibt. Dadurch kann der Friktionsgrad zwischen Patrize und Matrize sehr genau eingestellt, resp. aktiviert werden. Aus dem Umstand, dass die Bohrung 21 durchgehend ist geht ferner hervor, dass die Schraube 4 von beiden Seiten, d.h. von links oder rechts in die Matrize eingeschraubt werden kann, um die Matrize zu aktivieren.

Die Geschiebeteile werden aus für solche Teile üblichen Legierungen gegossen, beispielsweise die Matrize aus einer Legierung mit dem Handelsnamen Doral und die Patrize aus einer Legierung, die unter dem Namen Ceramicor bekannt ist. Aus der Beschreibung ist ersichtlich, dass der Kunststoffeinsatz einerseits ein sanftes Eingliedern der Prothese ermöglicht und andererseits eine einfache Aktivierung und sehr genaue Einstellung der Friktion ermöglicht.

## Patentansprüche

1. Extrakoronales, aktivierbares Geschiebe, mit einer am natürlichen Zahn oder Implantat zu befestigenden Patrize (1) und einer daran befestigbaren, mit dem Zahnersatzteil zu verbindenden Matrize (2), welche einen Kunststoffeinsatz (3) aufweist, der aus einem einen Teil (7) der Patrize (1) umfassenden Friktionsteil (14) und einem daran anschliessenden, in der Matrize (2) eingelassenen Befestigungsteil (15) besteht,
dadurch gekennzeichnet, dass das Befestigungsteil (15) des Kunststoffeinsatzes (3) mit einer Schraube (4) im U-förmigen Verankerungsteil (13) der Matrize (2) befestigt ist.

2. Geschiebe nach Anspruch 1, dadurch gekennzeichnet, dass das Verankerungsteil (13) eine durchgehende Gewindebohrung (21) und die Schraube (4) einen Kopf (16) mit anschliessendem, gewindelosen Zylinderstück (19) und daran anschliessendem Gewindebolzenstück (20), dessen Gewinde demjenigen der Gewindebohrung (21) entspricht, aufweist, wobei das Zylinderstück (19) einen kleineren Durchmesser als der Kopf (16) aufweist, um eine Abstützfläche (18) zu bilden, so dass beim Hineindrehen der Schraube ein Druck auf den Kunststoffeinsatz ausgeübt und die Friktion zwischen Matrize und Patrize eingestellt werden kann.

3. Geschiebe nach Anspruch 1 oder 2, dadurch gekennzeichnet, dass die Patrize (1) eine im natürlichen Zahn oder Implantat zu befestigende Approximalplatte (5) aufweist, an der je beidseitig mindestens eine Längsrille (8) oder Längsrippe angeordnet ist.

## Claims

1. An extracoronal, activatable attachment, having a male component (1) which is to be secured to the natural tooth or implant, and a female component (2) which is to be connected to the tooth substitute, said female component comprising a plastics insert (3) consisting of of a friction member (14) which encloses a portion (7) of said male component (1) and an adjoining securing member (15) which is embedded in said female component (2), characterised in that said securing member (15) of the plastics insert (3) is secured in the U-shaped anchoring member (13) of said female component (2) by means of a screw (4).

2. An attachment according to claim 1, characterised in that said anchoring member (13) is provided with a through-going threaded bore (21) and said screw (4) is provided with a head (16) having an adjoining threadless cylindrical portion (19) and a threaded bolt portion (20) connected thereto whose thread corresponds to that of said threaded bore (21), said cylindrical portion (19) having a smaller diameter than said head (16) in order to form a supporting surface (18), in such a manner that a pressure is applied to said plastics insert and the friction between said female and said male component is adjustable while said screw is being screwed in.

3. An attachment according to claim 1 or 2, characterised in that said male component (1) comprises a proximal plate (5) which is to be secured in the natural tooth or in the implant and which is provided with at least one longitudinal groove (8) or longitudinal rib on either side.

## Revendications

1. Attache extracoronaire activable, comprenant un élément mâle (1) à fixer à la dent naturelle ou à l'implant, et un élément femelle (2) attachable à celui-là et à connecter au remplacement dentaire, ledit élément femelle (2) présentant une insertion (3) en matière synthétique constituée d'un membre de friction (14) entourant une partie (7) de l'élément mâle (1) et d'un membre de fixation (15) connexe qui est emboîtée dans l'élément femelle (2), caractérisée en ce que le membre de fixation (15) de l'insertion en matière synthétique (3) est fixé dans le membre d'ancrage (13) en forme de U de l'élément femelle (2) par une vis (4).

2. Attache selon la revendication 1, caractérisée en ce que le membre d'ancrage (13) présente un alésage taraudé traversant (21), et que la vis (4) présente une tête (16) avec une partie connexe cylindrique (19) sans filetage et une partie en boulon fileté (20) solidaire dont le filet correspond au taraudage de l'alésage taraudé, la partie cylindrique (19) ayant un diamètre plus petit que la tête (16) afin de former une surface d'appui (18), de sorte qu'en serrant la vis, une pression agit sur l'insertion en matière synthétique et que la friction entre l'élément femelle et l'élément mâle peut être ajustée.

3. Attache selon la revendication 1 ou 2, caractérisée en ce que l'élément mâle (1) comporte une plaque proximale (5) qui sera fixée dans la dent naturelle ou l'implant et qui présente au moins une rainure (8) ou nervure longitudinale de chaque côté.
